# FASCICULE DE BREVET EUROPEEN

(11) **EP 1 885 659 B1**
(45) Date de publication et mention de la délivrance du brevet: **18.07.2018**
(21) Numéro de dépôt: 06794433.0
(22) Date de dépôt: 16.05.2006
(51) Int. Cl.: C03C 17/34, C03C 17/38, F24C 7/08, F24C 15/10, H05B 3/74

(54) **PLAQUE VITROCERAMIQUE ET SON PROCEDE DE FABRICATION**
GLASKERAMIKPLATTE UND ZUGEHÖRIGES HERSTELLUNGSVERFAHREN
GLASS-CERAMIC PLATE AND METHOD FOR THE PRODUCTION THEREOF

(30) Priorité: 20.05.2005 FR 0551315
(43) Date de publication de la demande: 13.02.2008
(73) Titulaire: Eurokera S.N.C., 02405 Château-Thierry Cedex (FR)
(72) Inventeur: DEMOL, Franck, F-02400 Chateau-Thierry (FR); VILATO, Pablo, F-75014 Paris (FR)
(74) Mandataire: Saint-Gobain Recherche
(86) Numéro de dépôt international: PCT/FR2006/050448
(87) Numéro de publication internationale: WO 2007/000532

(56) Documents cités:
- EP-A1- 0 693 464
- DE-A1- 3 433 880
- DE-A1- 10 014 373
- DE-C1- 4 020 972
- FR-A1- 2 765 570
- GB-A- 1 331 357
- US-A- 3 816 704
- US-A- 4 057 434
- US-A- 5 104 692
- US-A- 5 891 520
- PATENT ABSTRACTS OF JAPAN vol. 1998, no. 13, 30 novembre 1998 (1998-11-30) & JP 10 203848 A (TOSHIBA GLASS CO LTD), 4 août 1998 (1998-08-04)

## Description

La présente invention concerne une plaque vitrocéramique destinée, notamment, à couvrir ou recevoir des éléments de chauffage, en particulier destinée à servir de plaque de cuisson, les éléments de chauffage associés à cette plaque étant en particulier des foyers de chauffage par induction.

Les ventes de plaques de cuisson en vitrocéramique sont en augmentation constante depuis plusieurs années. Ce succès s'explique notamment par l'aspect attractif de ces plaques et par leur facilité de nettoyage.

Rappelons qu'une vitrocéramique est à l'origine un verre, dit verre précurseur, dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : pour pouvoir être utilisée comme plaque de cuisson, une plaque vitrocéramique doit notamment présenter une transmission dans les longueurs d'onde du domaine du visible à la fois suffisamment basse pour masquer au moins une partie des éléments de chauffage sous-jacents au repos et suffisamment élevée pour que, dans un but de sécurité, l'utilisateur puisse détecter visuellement les éléments de chauffage en état de marche. Généralement, elle doit également présenter une transmission élevée dans les longueurs d'onde du domaine de l'infrarouge.

Les premières plaques mises au point ont ainsi été des plaques de couleur sombre, en particulier noires. Plus récemment, d'autres plaques ont été mises au point d'aspect plus clair (en particulier blanches), et présentant par exemple un flou d'au moins 50% (comme décrit dans le brevet FR2766816), la prise en compte des critères précédemment cités (tels que la détection des éléments de chauffage en état de marche sans éblouissement ou vision peu esthétique desdits éléments) se faisant parfois au détriment d'autres aspects (tels que la vision nette d'afficheurs éventuels disposés sous la plaque).

D'autres plaques, décorées, sont notamment décrites dans les demandes de brevets EP0693464, DE10014373, et FR2765570 .

La présente invention a cherché à mettre au point un nouveau type de plaque vitrocéramique permettant d'élargir la gamme des produits existants, en particulier une plaque vitrocéramique améliorée présentant un nouvel aspect plus fonctionnel, sans que les modifications apportées n'aient d'effets néfastes sur les propriétés habituellement recherchées.

La nouvelle plaque selon l'invention est une plaque vitrocéramique, destinée à couvrir au moins un élément de chauffage, en particulier destinée à servir de plaque de cuisson, ladite plaque étant telle que définie en revendication 1.

La plaque est à base d'une vitrocéramique transparente ou translucide et le revêtement est destiné à masquer, au moins en partie, les éléments sous-jacents au repos (tels que éléments de chauffage et afficheurs éventuels), tout en permettant la détection des éléments de chauffage et afficheurs éventuels lorsqu'ils sont en service. Les zones (ou régions) précitées sont choisies de façon à répondre aux objectifs évoqués, et présentent notamment un contraste (ou opposition mise en valeur par leur juxtaposition) dans ce but, comme explicité ci-après.

Généralement, une des zones précitées (ou groupe de zones comme précisé ci-après) constitue la zone dite de fond, occupant la majorité de la surface du revêtement (généralement de 50 à 99%) et préférentiellement destinée à masquer l'essentiel de la structure chauffante que la plaque doit recouvrir ; l'autre zone précitée (ou l'autre groupe de zones contrastées par rapport à la zone de fond) est préférentiellement une zone dite de signalisation, permettant de mettre en évidence par rapport au fond, un décor et/ou une indication (marque, logo, symbole, etc.) et/ou l'emplacement d'éléments fonctionnels tels que les éléments de chauffage, les organes de commande, les afficheurs, etc. cette zone permettant également de détecter si ces éléments sont en état de marche ou non (la surface couverte par cette dernière zone représentant généralement de 1 à 50% de la surface du revêtement). Par la suite, on entend par zone (selon le nombre de zones de chaque catégorie présentes sur la plaque) aussi bien une seule zone bien délimitée (lorsque cette zone est unique dans sa catégorie) qu'un groupe ou ensemble de zones identiquement revêtues ou présentant le même effet (en relation avec le contraste recherché entre les zones ou groupes de zones) lorsqu'il y a plusieurs zones délimitées de même catégorie.

La base vitrocéramique ou substrat nu formant la plaque (avant l'ajout du revêtement) est transparente ou translucide comme indiqué précédemment, et présente une transmission lumineuse T_{L} (dans le domaine des longueurs d'onde du visible - intégrée entre 0,38 µm et 0,78 µm - selon l'illuminant D₆₅) supérieure à 50%, en particulier comprise entre 50 et 90%. Le revêtement (et les couches le constituant comme explicité ultérieurement) est préférentiellement choisi de façon à ce que la plaque munie du revêtement selon l'invention présente à l'endroit de sa zone de fond une transmission lumineuse très faible (notamment inférieure à 5 ou 10%, voire quasi-nulle ou nulle), la zone dite de signalisation pouvant quant à elle présenter une transmission lumineuse inférieure par exemple à 20% (notamment comprise entre 0,2 et 20%), en particulier inférieure à 10% (notamment comprise entre 0,5 et 10%).

Le revêtement à zones contrastées se trouve sur la face destinée à être tournée vers (ou disposée en regard de) le ou les éléments de chauffage en position d'utilisation (face généralement dite inférieure ou intérieure).

Selon l'invention, les deux zones contrastées sont au moins une zone à effet brillant ou réfléchissant ou miroir, appelée ci-après zone réfléchissante, et au moins une zone à effet (en particulier comparativement) mat (ayant notamment un effet opacifiant ou masquant au moins partiel), appelée ci-après zone mate.

De préférence, la zone mate (ou de plus forte épaisseur) est la zone dite de fond ; la zone réfléchissante (ou de plus faible épaisseur) constitue quant à elle préférentiellement la zone dite de signalisation.

La plaque selon l'invention présente de nombreux avantages tant au niveau technique qu'esthétique, comme il apparaîtra également dans la suite de la description. Elle permet notamment le masquage des éléments de chauffage, organes de commande et afficheurs associés lorsqu'ils ne sont pas en service, et leur détection visuelle par l'utilisateur lorsqu'ils sont en service sans que celui-ci ne soit ébloui. Le cas échéant, la zone réfléchissante, autorisant à la fois ce masquage au repos et la détection des éléments en marche, présente également l'avantage de permettre l'utilisation d'indicateurs (de durée, puissance, etc.), tels que des diodes électroluminescentes, de diverses couleurs, contrairement aux plaques opaques ou sombres habituelles n'autorisant l'utilisation que d'indicateurs émettant dans le rouge.

Les plaques selon l'invention sont pratiques d'utilisation et faciles à nettoyer. Le positionnement de l'ensemble du revêtement en face inférieure permet d'éviter le cas échéant des effets optiques inesthétiques tels qu'un dédoublement d'image, en même temps qu'il permet d'éviter des problèmes d'abrasion dudit revêtement lors du nettoyage de la face exposée (surface extérieure ou supérieure tournée vers l'utilisateur) de la plaque en position d'utilisation. Les constituants de la plaque sont également choisis de façon à ce qu'elle présente une bonne résistance mécanique et thermique, et soit compatible avec l'utilisation d'éléments de chauffage sous-jacents tels que des éléments de chauffage électrique par induction, ou éventuellement d'autres types d'éléments tels que des brûleurs à gaz atmosphérique.

Par plaque vitrocéramique, on entend par la suite non seulement les plaques réalisées en vitrocéramique proprement dite mais également les plaques en tout autre matériau analogue résistant à haute température et présentant un coefficient de dilatation nul ou quasi-nul (par exemple inférieur à 15.10⁻⁷ K⁻¹). De préférence cependant, il s'agit d'une plaque en vitrocéramique proprement dite.

Le revêtement est formé d'au moins deux couches déposées de façon à former les zones précitées, l'une des couches étant une couche de peinture à base de résine(s), résistant à haute température, ladite couche couvrant généralement uniquement la zone de fond, l'autre couche étant une couche réfléchissante, et couvrant généralement au moins la zone de signalisation.

La ou les couches de peinture utilisées sont avantageusement choisies de façon à résister à de hautes températures et à présenter une stabilité, dans le temps au niveau de leur couleur et de leur cohésion avec la plaque, et de façon à ne pas affecter les propriétés mécaniques de la plaque.

La ou les peintures utilisées présentent avantageusement une température de dégradation supérieure à 350°C, en particulier comprise entre 350°C et 500°C. Elles sont à base de résine(s), le cas échéant chargées (par exemple en pigment(s) ou colorant(s)), et sont éventuellement diluées pour ajuster leur viscosité en vue de leur application sur la vitrocéramique, le diluant ou solvant (par exemple du white spirit, du toluène, etc.) étant le cas échéant éliminé lors de la cuisson ultérieure de la ou des peintures.

La peinture est une peinture à base d'au moins une résine silicone, en particulier une résine silicone modifiée par l'incorporation d'au moins une résine alkyde. On peut également ajouter des pigments comme colorants, tels que des pigments pour émaux (choisis par exemple parmi les composés contenant des oxydes métalliques, tels que des oxydes de chrome, des oxydes de cuivre, des oxydes de fer, des oxydes de cobalt, des oxydes de nickel, ou parmi les chromates de cuivre, les chromates de cobalt, etc), TiO₂, etc.

De façon particulièrement préférée, la peinture utilisée comprend au moins (ou est à base de) un (co)polymère résistant à haute température (en particulier présentant une température de dégradation supérieure à 400°C), cette peinture pouvant ou non renfermer au moins une charge minérale pour assurer sa cohésion ou son renforcement mécanique et/ou sa coloration, ce (co)polymère ou résine étant une ou plusieurs résines polysiloxane.

Les résines polysiloxanes sont incolores, et donc susceptibles d'être colorées (par exemple avec des charges ou pigments leur conférant la couleur souhaitée) ; elles peuvent être utilisées en l'état réticulable (généralement de par la présence de groupements SiOH et/ou SiOMe dans leur formule, ces groupements intervenant le plus souvent jusqu'à 1 à 6 % en masse de leur masse totale), ou transformées (réticulées ou pyrolysées). Elles présentent avantageusement, dans leur formule, des motifs phényle, éthyle, propyle et/ou vinyle, très avantageusement des motifs phényle et/ou méthyle. Elles sont de préférence choisies parmi les polydiméthylsiloxanes, les polydiphénylsiloxanes, les polymères de phénylméthylsiloxane et les copolymères de diméthylsiloxane-diphénylsiloxane.

Les résines polysiloxanes réticulables préférentiellement utilisées présentent généralement une masse moléculaire moyenne en poids (Mw) comprise entre 2000 et 300 000 Daltons.

De façon non limitative, on peut indiquer que des résines Dow Corning® 804, 805, 806, 808, 840, 249, 409 HS et 418 HS, Rhodorsil® 6405 et 6406 de Rhodia, Triplus® de General Electric Silicone et SILRES® 604 de Wacker Chemie GmbH, utilisées seules ou en mélange conviennent parfaitement.

Les résines ainsi choisies sont notamment aptes à résister au chauffage par induction et peuvent également convenir (en particulier les résines polysiloxanes ci-avant) pour d'autres types de chauffage (à brûleur à gaz, voire radiant ou halogène).

La peinture peut être exempte de charges minérales, notamment si son épaisseur reste faible. Toutefois, de telles charges minérales sont généralement utilisées, par exemple pour renforcer mécaniquement la couche de peinture déposée, contribuer à la cohésion de ladite couche, à son accrochage à la plaque, pour lutter contre l'apparition et la propagation des fissures en son sein, etc. A de telles fins, au moins une fraction desdites charges minérales présente préférentiellement une structure lamellaire. Les charges peuvent aussi intervenir pour la coloration. Le cas échéant, plusieurs types de charges complémentaires peuvent intervenir (par exemple des charges non colorées pour le renforcement mécanique et d'autres charges telles que des pigments pour la coloration). La quantité efficace de charges minérales correspond généralement à un taux volumique de 10 à 60 %, plus particulièrement de 15 à 30 % (taux volumiques basés sur le volume total des charges et de la peinture).

L'épaisseur de chaque couche de peinture déposée peut être comprise entre 1 et 100 microns, notamment entre 5 et 50 microns. L'application de la peinture ou résine peut s'effectuer par toute technique adaptée, telle que le dépôt à la brosse, à la raclette, par pulvérisation, dépôt électrostatique, trempage, dépôt au rideau, dépôt par sérigraphie, etc, et se fait de préférence par sérigraphie (ou éventuellement dépôt à la raclette).

Le dépôt peut être suivi par un traitement thermique destiné à assurer selon les cas le séchage, la réticulation, la pyrolyse, etc. de la ou des couches déposées.

De préférence, le revêtement selon l'invention comprend au moins une couche de peinture dans laquelle la résine a été, au moins en partie, réticulée et/ou pyrolysée, partiellement ou en totalité, et/ou n'a pas été traitée thermiquement (la résine peut éventuellement être destinée à être éliminée des endroits où elle n'a pas été traitée thermiquement), ladite couche de peinture consistant, en partie ou en totalité, en un mélange a) de charges minérales et b) d'au moins une résine polysiloxane réticulable (quasi) exempte de précurseur(s) de matériau(x) carboné(s) et/ou d'au moins une résine polysiloxane réticulée (quasi) exempte de matériau(x) carboné(s) et de précurseur(s) de matériau(x) carboné(s) et/ou d'une matrice minérale poreuse à base de silice (la résine ayant par exemple été pyrolysée et se trouvant donc minéralisée), (quasi) exempte de matériau(x) carboné(s), les charges minérales étant distribuées dans la résine ou matrice.

En ce qui concerne la ou les couches réfléchissantes utilisées selon la présente invention, ces couches peuvent être par exemple des couches à effet miroir ou pailleté, à base de couches minces ou d'empilements de couches minces ou comprenant des pigments à effet, etc.

Selon un premier mode de réalisation particulièrement avantageux, on utilise au moins une couche réfléchissante formée d'au moins une (sous) couche de type métallique et/ou d'au moins une (sous) couche à base de matériau diélectrique comme précisé ci_après, cette couche réfléchissante présentant généralement et avantageusement un effet miroir.

Cette couche peut donc être par exemple au moins une couche simple métallique ou essentiellement métallique (par exemple une couche mince d'Ag, W, Ta, Mo, Ti, Al, Cr, Ni, Zn, Fe, ou d'un alliage à base de plusieurs de ces métaux, ou une couche mince à base d'aciers inoxydables, etc.), ou peut être un empilement de (sous) couches comprenant une ou plusieurs couches métalliques, par exemple une couche métallique (ou essentiellement métallique) avantageusement protégée (revêtue sur au moins une face et de préférence sur ses deux faces opposées) par au moins une couche à base de matériau diélectrique (par exemple au moins une couche en argent ou en aluminium revêtue d'au moins une couche de protection en Si₃N₄ - en particulier un empilement Si₃N₄/métal/ Si₃N₄- ou en SiO₂).

Il peut alternativement s'agir d'un revêtement mono couche à base de matériau diélectrique à fort indice de réfraction n, c'est à dire supérieur à 1.8, de préférence supérieur à 1.95, de façon particulièrement préférée supérieur à 2, par exemple une monocouche de TiO₂, ou de Si₃N₄, ou de TiN, ou de SnO₂, etc.

Dans un autre mode de réalisation avantageux, la couche réfléchissante est formée d'un empilement de (sous) couches minces à base de matériau(x) diélectrique(s) alternativement à forts (supérieur à 1.8, voire 1.95, voire 2, comme explicité précédemment) et faibles (inférieur à 1.65) indices de réfraction, notamment de matériau(x) de type oxyde métallique (ou nitrure ou oxynitrure de métaux), tel que TiO₂, SiO₂, ou oxyde mixte (étain-zinc, zinc-titane, silicium-titane, etc.) ou alliage, etc., la (sous) couche déposée le cas échéant en premier et se trouvant donc contre la face intérieure de la plaque étant une couche de fort indice de réfraction.

Comme matériau de (sous) couche à fort indice de réfraction, on peut citer par exemple TiO₂ ou éventuellement SnO₂, Si₃N₄, SnₓZn_{y}O_{z}, TiZnOₓ ou SiₓTi_{y}O_{z}, ZnO, ZrO₂, Nb₂O₅, etc. Comme matériau de (sous) couche à faible indice de réfraction, on peut citer par exemple SiO₂, ou éventuellement un oxynitrure et/ou un oxycarbure de silicium, ou un oxyde mixte de silicium et d'aluminium, ou un composé fluoré par exemple de type MgF₂ ou AlF₃, etc.

L'empilement comprend par exemple avantageusement au moins trois (sous) couches, la réflexion souhaitée se produisant par l'action combinée des différentes couches de l'empilement, la couche la plus proche du substrat étant une couche de fort indice de réfraction, la couche intermédiaire étant une couche à faible indice de réfraction, et la couche extérieure étant une couche à fort indice de réfraction (par exemple un empilement comprenant l'alternance de couches d'oxydes suivante : (substrat)- TiO₂ /SiO₂/TiO₂).

L'épaisseur (géométrique) de chaque couche réfléchissante déposée est généralement comprise entre 15 et 1000 nm, en particulier entre 20 et 1000 nm (l'épaisseur du substrat étant généralement de quelques millimètres, le plus souvent autour de 4 mm). Dans le cas d'une couche réfléchissante formée de plusieurs (sous) couches (sous forme généralement d'un empilement de couches), l'épaisseur de chacune des (sous) couches de l'empilement peut varier entre 5 et 160 nm, généralement entre 20 et 150 nm (par exemple, dans le cas de l'empilement TiO₂ /SiO₂/TiO₂, elle peut être de l'ordre de quelques dizaines de nanomètres, par exemple de l'ordre de 60-80 nm, pour chacune des couches respectives de TiO₂ et SiO₂, ou elle peut être de l'ordre de 60-80 nm pour les couches de TiO₂ et de l'ordre de 130-150 nm pour la couche de SiO₂ selon l'aspect par exemple plutôt argenté ou plutôt doré que l'on souhaite obtenir).

La couche réfléchissante peut être appliqué sur la plaque, généralement après céramisation, en ligne ou en reprise (par exemple après découpe et/ou façonnage de ladite plaque). Elle peut être appliqué notamment par pyrolyse (poudre, liquide, gazeuse), par évaporation, ou par pulvérisation. De préférence, elle est déposée par pulvérisation et/ou par une méthode de dépôt sous vide et/ou assistée par plasma ; on utilise en particulier le mode de dépôt de couche(s) par pulvérisation cathodique (par exemple par pulvérisation cathodique magnétron), notamment assistée par champ magnétique (et en courant continu ou alternatif), les oxydes ou nitrures étant déposés à partir de cible(s) de métal ou d'alliage ou de silicium ou céramique(s), etc. appropriées, si nécessaire dans des conditions oxydantes ou nitrurantes (mélanges le cas échéant d'argon/oxygène ou d'argon/azote). On peut déposer par exemple les couches d'oxyde par pulvérisation réactive du métal en question en présence d'oxygène et les couches en nitrures en présence d'azote. Pour faire du SiO₂ ou du Si₃N₄ on peut partir d'une cible en silicium que l'on dope légèrement avec un métal comme l'aluminium pour la rendre suffisamment conductrice. La ou les (sous) couches choisies selon l'invention se condensent sur le substrat de façon particulièrement homogène, sans qu'il ne se produise de séparation ou délaminage.

Dans un autre mode de réalisation de l'invention, la couche réfléchissante peut être une couche comprenant des pigments à effet (pigments à effet métallique, pigments nacrés, pigments interférentiels, etc.), le cas échéant dissous dans un médium approprié, cette couche présentant généralement un effet pailleté. Cette couche est à base de silicate fondu, fritte ou fondant de verre (mélange vitrifiable comprenant généralement des oxydes choisis notamment parmi ceux employés dans les frittes pour émail, par exemple parmi les oxydes de silicium, de zinc, de sodium, de bore, de lithium, de potassium, de calcium, d'aluminium, de magnésium, de baryum, de strontium, d'antimoine, de titane, de zirconium, etc), et les pigments à effet utilisés sont avantageusement sous forme de paillettes d'oxyde d'aluminium (Al₂O₃) revêtues par des oxydes métalliques ; on peut citer par exemple les pigments commercialisés par la Société MERCK sous la marque « Xirallic® », tels que des pigments ou pigments interférentiels TiO₂/Al₂O₃ (Xirallic® T-50-10SW Crystal Silver ou Xirallic® T-60-20SW Sunbeam Gold ou Xirallic® T-60-21SW Solaris Red ou Xirallic® T-60-23SW Galaxy Blue ou Xirallic® T-60-24SW Stellar Green), ou des pigments Fe₂O₃/Al₂O₃ (Xirallic® T-60-50SW Fireside Copper ou Xirallic® F-60-51 Radiant Red).

D'autres pigments à effet pouvant être utilisés sont par exemple les pigments nacrés à base de particules de mica revêtues par des oxydes ou combinaison d'oxydes (choisis par exemple parmi TiO₂, Fe₂O₃, Cr₂O₃, etc), tels que ceux commercialisés sous la marque IRIODIN® par la Société Merck. Des charges ou autres pigments de coloration classiques peuvent également être incorporés aux pigments à effet précités. Le taux de pigments à effet peut être par exemple de l'ordre de 1 à 30% en poids par rapport à la base (silicate fondu, fritte ou fondant de verre) dans laquelle ils sont incorporés. La couche peut être notamment déposée par sérigraphie (la base et les pigments étant le cas échéant mis en suspension dans un médium approprié généralement destiné à se consumer dans une étape de cuisson ultérieure, ce médium pouvant notamment comporter des solvants, des diluants, des huiles, des résines, etc), l'épaisseur de la couche étant par exemple de l'ordre de 1 à 6 µm.

Comme déjà évoqué, la plaque selon l'invention est à base d'une vitrocéramique transparente ou translucide et présente en face inférieure un revêtement comprenant de préférence une zone de fond formée à partir d'une peinture ayant un effet mat telle que définie ci-avant, et une zone de signalisation formée à partir d'une couche réfléchissante ayant un effet miroir telle que définie ci-avant.

Les plaques selon l'invention sont généralement des plaques à deux faces lisses, sans picots en face inférieure.

La plaque selon l'invention peut le cas échéant être munie de (ou associée avec des) élément(s) fonctionnel(s) ou de décor supplémentaire(s) (cadre, connecteur(s), câble(s), élément(s) de commande, afficheur(s), par exemple à diodes électroluminescentes dits « à 7 segments », bandeau de commande électronique à touches sensitives et affichage digital, etc.) et/ou peut éventuellement comporter, outre les zones contrastées précitées, une ou des zones, en particulier décoratives, supplémentaires (par exemple un émail en face supérieure), mais de dimensions préférentiellement limitées.

Le revêtement est généralement continu dans chacune des zones que l'on peut discerner sur la plaque mais il n'est cependant pas exclu d'avoir des dépôts moins couvrants en certains endroits (de type par exemple partie mouchetée ou maillage ou piquetage, etc.), le taux de couverture dans ces endroits restant cependant préférentiellement important (proche de 100%).

De préférence, la plaque selon l'invention est destinée à être associée à des éléments sous-jacents de chauffage par induction. Les foyers de cuisson à chauffage par induction sont connus et se composent généralement d'un convertisseur (ou générateur) relié à une self (ou inducteur) constituée par un bobinage de fils conducteurs. Le champ électromagnétique créé par le passage d'un courant haute fréquence produit par le convertisseur génère des courants de Foucault dans le fond métallique des ustensiles disposés sur la plaque, permettant la chauffe rapide de ces ustensiles. Les variations et maxima de températures subis par la plaque sont moins importants que ceux que l'on observe avec d'autres éléments de chauffage, par exemple halogène ou radiant, de ce fait la plaque selon l'invention est particulièrement bien adaptée à ce mode de chauffage, les chocs thermiques subis par le revêtement étant moins importants et moins susceptibles de l'endommager à long terme.

Les plaques selon l'invention satisfont aux impératifs en termes de propriétés optiques, de sécurité, elles présentent une bonne résistance aux chocs thermiques, etc. La plaque selon l'invention peut avantageusement être montée sur le support isolant, à l'intérieur duquel sont disposés le ou les éléments de chauffage tels que inducteurs, sans complexe intermédiaire visant à masquer l'intérieur de l'appareil à la vue de l'utilisateur.

L'invention concerne aussi les appareils (ou dispositifs) de cuisson et/ou de maintien à haute température comportant au moins une plaque selon l'invention (par exemple cuisinières, et plaques de cuisson encastrables). L'invention englobe aussi bien des appareils de cuisson comportant une seule plaque que des appareils comportant plusieurs plaques, chacune de ces plaques étant à feu unique ou à feux multiples. Par le terme « feu », on entend un emplacement de cuisson. L'invention concerne également des appareils de cuisson mixtes dont la ou les plaques de cuisson comportent plusieurs types de feux.

En outre, l'invention n'est pas limitée à la fabrication de plaques de cuisson pour cuisinières ou tables de cuisson, même si le problème à la base de l'invention est défini en relation avec cette application. Les plaques fabriquées conformément à l'invention peuvent également être d'autres plaques devant présenter une grande insensibilité aux variations de température.

La fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante.

Le procédé comprend généralement une opération de découpe, par exemple par jet d'eau, suivie éventuellement par une opération de façonnage (meulage, biseautage,...).

Le procédé de fabrication de la plaque selon l'invention se caractérise en ce que l'on applique sur une face de la plaque vitrocéramique nue (de préférence la face destinée à être en face inférieure en position d'utilisation), au moins une première couche (ou ensemble de (sous) couches) destinée à former au moins une première zone, et dans laquelle sont prévues ou pratiquées une ou des épargnes (ou réserves), et on vient recouvrir lesdites épargnes par au moins une seconde couche (ou ensemble de (sous) couches) destinée à former au moins une seconde zone contrastée par rapport à la ou aux premières zones.

Les couches sont appliquées par tous moyens connus de l'homme du métier en fonction notamment de la composition desdites couches à former. Des exemples des différentes méthodes d'application possibles ont été donnés précédemment. Selon le type de couche, le dépôt peut se faire avant (cas par exemple d'une couche d'émail pouvant être cuite pendant la céramisation) ou après céramisation (cas préféré de la peinture et des couches de type métallique ou à base de matériau diélectrique décrites précédemment), en ligne ou en reprise (par exemple après découpe et/ou façonnage de ladite plaque).

Pour la formation des épargnes, on peut utiliser différents moyens (selon le type de couche déposée et la précision des moyens de dépôt). Les réserves peuvent être laissées par la technique de dépôt (sérigraphie), ou en prévoyant des masques adéquats, par exemple en tôle, etc. On peut également envisager le dépôt d'une couche pouvant être éliminée, au niveau des épargnes, par lavage, ablation, polissage, etc., par exemple un dépôt de peinture que l'on ne durcit ou réticule que dans les parties voulues, le reste étant éliminé par lavage, ou bien un dépôt de couche(s) de type métallique ou à base de matériau diélectrique dans lequel on enlève des épargnes par des moyens tels que l'ablation laser ou le polissage.

Concernant le dépôt de la seconde couche, il peut être effectué dans les réserves ou épargnes seulement (avec des moyens de dépôt ou masques appropriés par exemple), ou sur une plus grande partie de la plaque, en particulier sur toute la plaque.

Ainsi, conformément à un mode de réalisation préféré du procédé selon l'invention, on applique, par exemple par sérigraphie (en une, voire plusieurs passes ou sous couches, et en prévoyant des épargnes), une première couche de peinture, en particulier de peinture (mate) telle que précédemment évoquée, puis, après traitement thermique ou cuisson de la peinture et lavage éventuel de la plaque, on applique la seconde couche (ou ensemble de (sous) couches) en recouvrant l'ensemble des zones déjà couvertes et des épargnes par au moins une couche réfléchissante à effet miroir, par pulvérisation cathodique (dans le cas d'une pulvérisation cathodique magnétron, il est en effet plus aisé de procéder au dépôt sur toute la plaque).

Dans un autre mode de réalisation, l'ordre de dépôt peut être inversé, par exemple en déposant au moins une couche réfléchissante continue sur la face inférieure de la plaque pourvue de masques aux endroits des épargnes choisies, en enlevant les masques et recouvrant si nécessaire les parties déjà couvertes d'autres masques, puis en appliquant la peinture, la peinture ne recouvrant avantageusement sur la plaque finale obtenue que les zones non couvertes par la couche réfléchissante.

La présente invention a également pour objet un appareillage ou dispositif pour la fabrication d'une plaque vitrocéramique telle que défini ci-avant, comportant au moins un dispositif de revêtement par sérigraphie et au moins un dispositif de pulvérisation cathodique.

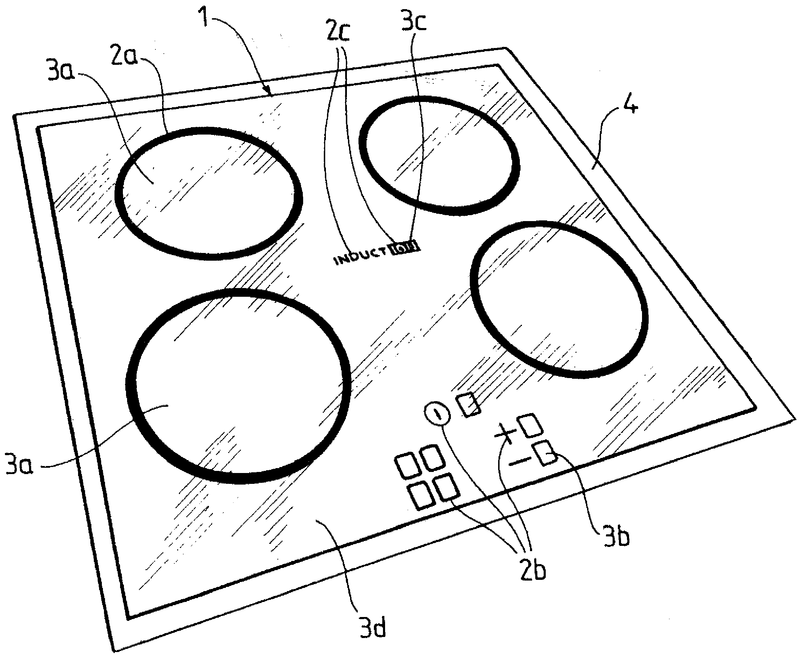

L'exemple suivant illustre la présente invention sans toutefois en limiter la portée conjointement avec la figure annexée représentant une vue (partielle issue d'une photographie) de dessus en perspective d'une plaque selon l'invention fabriquée conformément à cet exemple.

On fabrique une plaque vitrocéramique transparente 1 dont les deux faces sont lisses, à partir d'un verre ayant par exemple la composition décrite dans la demande EP0437228.

Ce verre est fondu aux alentours de 1600°C, en une quantité telle qu'un ruban de verre puisse être laminé, ruban dans lequel des plaques de verre de dimensions finales 56,5 cm x 56,5 cm x 0,4 cm sont découpées.

Ces plaques de verre sont céramisées sur des grilles céramiques selon un cycle de céramisation comprenant les étapes suivantes :
a) élévation de la température à 30-80 degrés/minutes jusqu'au domaine de nucléation, généralement situé au voisinage du domaine de transformation du verre ;
b) traversée de l'intervalle de nucléation (670-800°C) en une vingtaine de minutes avec maintien en température de quelques minutes;
c) élévation de la température en 15 à 30 minutes jusqu'à la température T du palier de céramisation de l'ordre de 930°C ;
d) maintien de la température T du palier de céramisation pendant un temps t de l'ordre de 20 minutes ;
e) refroidissement rapide jusqu'à la température ambiante.

La plaque obtenue est revêtue (par exemple par sérigraphie, avec dilution le cas échéant de la composition appliquée dans un médium approprié) par une peinture à base d'au moins une résine polysiloxane (obtenue par exemple en mélangeant un polymère silicone et une solution silicone) et de charges (telles qu'un mélange de pigments de couleur foncée, par exemple pour donner une couleur grise), sur toute sa face inférieure, à l'exception :
- des emplacements ou épargnes constitués par quatre couronnes circulaires 2a délimitant les emplacements qui se situeront au dessus de quatre foyers de chauffage par induction en position d'utilisation des plaques,
- des régions 2b formant des symboles (+, - et symbole de marche) ainsi que sept rectangles délimitant des zones qui se situeront au-dessus d'afficheurs ou indicateurs (de durée, puissance, etc.),
- et des indications 2c essentiellement décoratives (ici les 6 premières lettres du mot « INDUCTION », et un rectangle faisant ressortir en négatif les trois dernières lettres ION).

La peinture est ensuite cuite ou polymérisée dans un four ou tunnel. L'épaisseur de la couche obtenue est par exemple comprise entre 15 et 100 microns. On peut alors apercevoir par transparence au travers de la plaque une zone de fond par exemple de couleur grise mate formée par plusieurs petites zones 3a, 3b, 3c, 3d délimitées par les épargnes.

Après lavage éventuel de la plaque revêtue de la peinture, on effectue le dépôt d'une couche réfléchissante, par exemple à base de Ni-Cr-Fe (dans des proportions respectives par exemple de l'ordre de 68%/22%/10%) dans des épaisseurs de l'ordre de 22,5 nanomètres (permettant d'obtenir pour cette couche un bon compromis pour les zones d'affichage entre le fait de cacher les afficheurs éteints et de les voir distinctement quand ils sont allumés), par pulvérisation cathodique magnétron, sur toute la surface de la face inférieure de la plaque déjà revêtue de la peinture. L'effet miroir produit par cette couche réfléchissante très fine ne s'exerce qu'à l'endroit des épargnes ménagées dans la couche de peinture et n'a pas d'effet négatif sur l'aspect gris mat opaque de la zone de fond visible par transparence de la vitrocéramique par le dessus de la plaque.

On obtient donc une plaque vitrocéramique à l'aspect esthétique plaisant et original, cette plaque présentant une zone de fond par exemple gris/gris métallisé (formée par l'ensemble des zones 3a, 3b, 3c, 3d) mate opaque cachant les éléments de structure sous-jacents du dispositif de cuisson, et comportant une zone de signalisation (formée par l'ensemble des zones 2a, 2b, 2c) avec des motifs d'aspect brillant (par exemple d'aspect miroir plutôt argenté) cachant également les éléments sous-jacents au repos tout en permettant de voir quand ils sont en état de marche. Le revêtement étant totalement en face inférieure, il n'y a pas de problèmes de dédoublement de l'image ni de problèmes d'abrasion (par exemple par frottements de casseroles) du décor. La plaque peut être montée dans un cadre 4, encastrée dans un dispositif de cuisson, etc.

Les plaques selon l'invention peuvent notamment être utilisées avec avantages pour réaliser une nouvelle gamme de plaques de cuisson pour cuisinières ou tables de cuisson.

## Revendications

1. Plaque vitrocéramique destinée à couvrir au moins un élément de chauffage, ladite plaque étant à base d'une vitrocéramique transparente ou translucide présentant une transmission lumineuse TL supérieure à 50% et présentant un revêtement comportant au moins deux zones contrastées qui sont une zone réfléchissante et une zone mate sur la face destinée à être tournée vers le ou les éléments de chauffage en position d'utilisation, ces deux zones contrastées présentant une opposition mise en valeur par leur juxtaposition, le revêtement étant formé d'au moins deux couches déposées de façon à former les zones précitées, l'une des couches étant une couche de peinture mate à base d'au moins une résine silicone et l'autre couche étant une couche réfléchissante formée d'au moins une couche métallique ou d'une mono couche à base de matériau diélectrique à indice de réfraction n supérieur à 1.8 ou d'un empilement de couches minces à base de matériau(x) diélectrique(s) alternativement à indice de réfraction supérieur à 1.8 et indices de réfraction inférieur à 1.65, ou formée d'un silicate fondu ou d'une fritte ou d'un fondant de verre comprenant des pigments sous forme de paillettes d'oxyde d'aluminium revêtues par des oxydes métalliques ou à base de particules de mica revêtues par des oxydes ou combinaison d'oxydes.

2. Plaque vitrocéramique selon la revendication 1, **caractérisée en ce qu'**elle est destinée à être associée à des éléments sous-jacents de chauffage par induction.

3. Appareil de cuisson et/ou de maintien à haute température comportant une plaque vitrocéramique selon l'une des revendications 1 à 2 et un ou plusieurs éléments de chauffage, en particulier de chauffage par induction.

## Patentansprüche

1. Glaskeramikplatte, die dazu bestimmt ist, mindestens ein Heizelement zu bedecken, wobei die Platte aus einer transparenten oder transluzenten Glaskeramik besteht, die eine Lichtdurchlässigkeit TL größer 50 % aufweist, und eine Beschichtung aufweist, die mindestens zwei kontrastierende Zonen umfasst, bei denen es sich um eine reflektierende Zone und eine matte Zone auf der Seite handelt, die dazu bestimmt ist, in Gebrauchsposition dem oder den Heizelementen zugewandt zu sein, wobei die beiden kontrastierenden Zonen einen Gegensatz aufweisen, der durch ihre Anordnung nebeneinander hervorgehoben wird, wobei die Beschichtung aus mindestens zwei Schichten gebildet ist, die derart abgeschieden werden, dass sie die vorgenannten Zonen bilden, wobei eine der Schichten eine Schicht aus Mattfarbe ist, die aus mindestens einem Silikonharz besteht, und die andere Schicht eine reflektierende Schicht ist, die aus mindestens einer Metallschicht oder einer Monolayer gebildet ist, die aus dielektrischem Material mit einem Brechungsindex n größer 1,8 besteht, oder einem Stapel von Dünnschichten, die aus dielektrischem Material (dielektrischen Materialien) alternativ mit einem Brechungsindex größer 1,8 und Brechungsindizes kleiner 1,65 bestehen, oder aus einem geschmolzenen Silikat oder einer Fritte oder einer Glasschmelze, umfassend Pigmente in Form von Aluminiumoxidplättchen, die mit Oxiden oder Oxidkombinationen beschichtet sind, gebildet sind.

2. Glaskeramikplatte nach Anspruch 1, **dadurch gekennzeichnet, dass** sie dazu bestimmt ist, mit darunterliegenden Induktionsheizelementen verbunden zu werden.

3. Vorrichtung zum Kochen und/oder zum Halten auf einer hohen Temperatur, umfassend eine Glaskeramikplatte nach einem der Ansprüche 1 bis 2 und ein oder mehrere Heizelemente, insbesondere Induktionsheizelemente.

## Claims

1. Glass-ceramic plate intended to cover at least one heating element, said plate being based on a transparent or translucent glass-ceramic having a light transmission TL greater than 50% and having a coating comprising at least two contrasted zones which are a reflecting zone and a matt zone on the face intended to be turned towards the heating element or elements in the position of use, these two contrasted zones having an opposition shown by their juxtaposition, the coating being formed of at least two layers deposited so as to form the aforementioned zones, one of the layers being a matt paint layer based on at least one silicone resin and the other layer being a reflecting layer formed of at least one metallic layer or of a monolayer based on a dielectric material with a refractive index n greater that 1.8 or of a stack of thin layers based on dielectric material(s) with alternately a refractive index greater than 1.8 and a refractive index less than 1.65, or formed of a molten silicate or a frit or a glass flux comprising pigments in the form of aluminium oxide flakes coated with metal oxides or based on mica particles coated with oxides or a combination of oxides.

2. Glass-ceramic plate according to Claim 1, **characterized in that** it is intended to be associated with subjacent induction heating elements.

3. Apparatus for cooking and/or for maintaining a high temperature comprising a glass-ceramic plate according to either of Claims 1 and 2 and one or more heating elements, in particular induction heating elements.
